# EUROPÄISCHE PATENTSCHRIFT

(11) **EP 2 324 954 B1**
(45) Veröffentlichungstag und Bekanntmachung des Hinweises auf die Patenterteilung: **28.10.2015**
(21) Anmeldenummer: 10191656.7
(22) Anmeldetag: 18.11.2010
(51) Int. Cl.: B24B 27/00, B24B 49/00, B24B 9/00, B24B 29/00

(54) **Oberflächenbearbeitungsvorrichtung**
Surface processing device
Dispositif de traitement de surface

(30) Priorität: 19.11.2009 CH 17872009
(43) Veröffentlichungstag der Anmeldung: 25.05.2011
(73) Patentinhaber: Vogel, Josef, 6048 Horw (CH)
(72) Erfinder: Vogel, Josef, 6048 Horw (CH)
(74) Vertreter: Troesch Scheidegger Werner AG

(56) Entgegenhaltungen:
- EP-A1- 0 919 332
- EP-A2- 0 446 849
- WO-A1-92/04663
- DE-A1- 4 030 176
- DE-A1- 19 747 798
- US-B1- 6 572 444

## Beschreibung

Die vorliegende Erfindung betrifft eine Vorrichtung nach dem Oberbegriff Anspruch 1 sowie ein Verfahren zur Bearbeitung von Werkstücken nach dem Oberbegriff von Anspruch 8.

In der industriellen Entgrat- und Oberflächenbearbeitungstechnik werden beispielsweise Tellerschleifwerkzeuge eingesetzt. Derartige Schleifwerkzeuge weisen einen tellerförmigen Grundkörper auf, welcher einerseits die Schleifmittel aufnimmt und andererseits ein Verbindungssystem aufweist, um mit einer Antriebsspindel der Bearbeitungsvorrichtung form- und kraftschlüssig verbunden zu werden.

Als Schleifmittel werden dabei beispielsweise Lamellen, Borsten, Flies und Schleifklötze eingesetzt, welche mit der Unterseite des Grundkörpers verbunden sind. Entsprechend dem Einsatzgebiet werden unterschiedlichste Materialen eingesetzt, um das gewünschte Schleif und/oder Entgratresultat zu erzielen.

Aus der EP0919332 A1 ist beispielsweise eine derartige Vorrichtung mit einer Spindel bekannt, bei welcher die Drehzahlen durch Anordnung von zwei Antriebsmotoren voneinander unabhängig eingestellt werden können.

Bei dieser Antriebsart können auch mehrere Spindeln in einem gemeinsamen Spindelträger angeordnet sein und damit die Bearbeitungswirkung durch gleichzeitigen Einsatz von mehreren Werkzeugen erhöht werden.

Der Spindelträger ist vertikal bewegbar in der Vorrichtung angeordnet, wobei die Bewegung durch eine Maschinensteuerung, in der Regel einer softwareunterstützten Steuerung, bewirkt wird. Der Antrieb erfolgt beispielsweise mittels Servoantrieb, welcher eine sehr präzise und schnelle Zustellung der Werkzeuge erlaubt.

Für eine exakte Bearbeitung der unter den Werkzeugen angeordneten Werkstücke muss die Maschinensteuerung die Spindel mit den Werkzeugen bis zum ersten Eingriff der Werkzeugbearbeitungsebene mit dem Werkstück zum Werkstück hin verfahren und danach entsprechend der gewünschten Bearbeitung mit einem vorgegebenen Druck und/oder bis zu einer vorgegebenen Bearbeitungstiefe gegen resp. in das Werkstück einfahren.

Hierfür ist es notwendig, die genaue Ausgangsposition der Werkzeugbearbeitungsebene, d.h. der Arbeitsoberfläche des Werkzeuges, im Weiteren Werkzeugebene genannt, gegenüber der Oberfläche des zu bearbeitenden Werkstückes zu bestimmen, um anschliessend den Weg der Bearbeitungstiefe der Spindel entsprechend den Bearbeitungsvorgaben zu steuern.

Hierfür werden beispielsweise optische Sensoren eingesetzt, welche diese Ausgangsposition durch Erfassen der Position der Werkzeugebene erfassen resp. kalibrieren, um danach das Werkzeug mit einen definierten Vorschub gegen das Werkstück zu verfahren.

Bei Werkzeugen mit einer elastischen Oberfläche und einer während der Einsatzzeit variablen Dicke muss während der Bearbeitung immer wieder der Kalibrierprozess wiederholt werden, da sich die Höhe des Werkzeuges aufgrund von Abrieb ständig verringert und sich damit der Abstand der Werkzeugebene gegenüber dem Werkstück stetig verändert. Diese Kalibriervorgänge unterbrechen aber den eigentlichen Bearbeitungsvorgang, so dass sich die totale Bearbeitungszeit des Werkstückes um diese Kalibriervorgänge verlängert resp. verzögert. Ein zu langes Kalibrierintervall führt hingegen zu grösseren Abweichungen der Bearbeitung. Gerade bei engen Bearbeitungstoleranzen wird durch kurze Kalibrierintervalle die totale Bearbeitungszeit stark verlängert.

Die Aufgabe der vorliegenden Erfindung bestand darin, eine derartige Bearbeitungsvorrichtung bereitzustellen, welche eine präzise und rationelle Bearbeitung von Werkstückoberflächen mit tellerförmigen Schleifwerkzeugen mit flexibler, Bearbeitungsoberfläche erlaubt.

Es wird hier festgehalten, dass nachfolgend unter derartigen Werkzeugen insbesondere Tellerschleifwerkzeuge mit Lamellen-, Flies-, und Borstenelementen, verstanden werden, welche zum Schleifen, Entgraten, Kantenpräparieren und Polieren von Werkstücken eingesetzt werden. Dabei stehen die flexiblen Bearbeitungsoberflächen im Gegensatz zu starren Bearbeitungsoberflächen wie sie bei Schleifscheiben oder Schleifstiften eingesetzt werden.

Diese Aufgabe wird erfindungsgemäss durch eine Vorrichtung mit den Merkmalen nach Anspruch 1 gelöst. Weitere erfindungsgemässe Ausführungsformen ergeben sich aus den Merkmalen der weiteren Ansprüche 2 bis 7.

Die Vorrichtung zur gesteuerten Bearbeitung von Werkstückoberflächen mit tellerförmigen Schleifwerkzeugen mit einer Werkzeugsteuerung, wobei die Schleifwerkzeuge eine flexible Bearbeitungsoberfläche aufweisen, in einem Spindelhalter rotierend angetrieben angeordnet sind und der Spindelhalter mindestens vertikal gegenüber einer Transportbahn zur Aufnahme der zu bearbeitenden Werkstücke bewegbar angeordnet und mit einem gesteuerten Antrieb für die vertikale Bewegung verbunden ist, ist erfindungsgemäss mindestens ein Sensor zur Erfassung von Schwingungen oder Geräuschen durch die Schleifwerkzeuge am Werkstück an der Vorrichtung angeordnet und ist mit der Werkzeugsteuerung wirkverbunden. Mittels eines solchen Sensors lassen sich Geräusche oder Schwingungen erkennen, welche beim Eingreifen und/oder Bearbeiten des Werkstückes durch das Werkzeug erzeugt werden. Durch die Auswertung der Signale dieses Sensors kann damit die Position des Spindelhalters im Moment des Berührens des Werkzeuges mit dem Werkstück durch die Werkzeugsteuerung festgestellt werden und aufgrund dieser Information beispielsweise eine vordefinierte Eintauchtiefe des Werkzeuges resp. der Werkzeugebene reproduzierbar gesteuert werden. Die Eintauchtiefe kann damit präzise reproduziert werden, auch wenn sich das Werkzeug während der Bearbeitung mehrerer Werkstücke stetig verschleisst und damit die absolute Werkzeugtiefe stetig verringert wird.

Beispielsweise ist das Werkstück auf der Transportbahn direkt oder über eine Werkstückaufnahme und/oder einen Werkstückträger angeordnet. Grosse, flächige Werkstücke können vorteilhaft direkt auf der Transportbahn angeordnet und bearbeitet werden. Kleinere oder fülligere Werkstücke können auf einem Werkstückträger angeordnet werden und mit einer Werkstückaufnahme fixiert werden.

Beispielsweise ist der Sensor am Spindelhalter und/oder der Transportbahn und/oder der Werkstückaufnahme und/oder dem Werkstückträger angeordnet. Vorteilhaft ist dabei der Sensor nicht am Werkstück selbst, sondern an einem anderen Element angeordnet. Je nach Grösse und Beschaffenheit der Werkstücke muss der Sensor in unmittelbarer Nähe des Werkstückes angeordnet werden oder kann auch am Spindelhalter angeordnet sein. Auch eine Kombination mehrer Sensoren ist denkbar. Beispielsweise kann direkt in der Maschinensteuerung die Auswahl oder Kombination der Sensoren resp. deren Signal vorgenommen resp. eingestellt werden.

Beispielsweise ist der Sensor ein Akustiksensor oder ein Schwingungssensor. Auch hier kann entsprechend der Eigenschaften sowohl des Werkstückes wie auch der einzusetzenden Werkzeuge ein akustischer Sensor, der die erzeugten Schallwellen erfasst, oder ein Schwingungssensor, der die erzeugten mechanischen Schwingungen erfasst, eingesetzt werden.

Beispielsweise ist mindestens ein Sensor über eine Auswertungseinheit mit der Maschinensteuerung verbunden. In der Auswertungseinheit kann beispielsweise die Auswahl und/oder Zuordnung der Sensoren definiert resp. eingestellt werden. Darin können auch Kriterien zur Auswertung der durch die Sensoren gelieferten Signale hinterlegt und ausgewertet werden, um darauf folgend ein Positions- oder Bearbeitungssignal an die Maschinensteuerung zu übermitteln.

Beispielsweise sind im Spindelhalter mehrere Spindeln zur Aufnahme jeweils eines Werkzeuges angeordnet, wobei vorzugsweise jede Spindel einzeln gesteuert vertikal bewegbar ist. Ein derartiger Spindelhalter hat den Vorteil, dass keine Bearbeitungsunterbrüche zum Auswechseln von unterschiedlichen Werkzeugen erfolgen müssen, mit welchen ein bestimmtes Werkstück nacheinander bearbeitet werden muss.

Da die flexible Bearbeitungsoberfläche elastisch und abrasiv ist, ergeben sich während des Betriebs relativ starke Änderungen der Form, so dass mit der erfindungsgemässen Vorrichtung eine besonders präzise und rationelle Bearbeitung erreicht werden kann.

Bei derartigen Bearbeitungsoberflächen ändert sich die Leistung, insbesondere die Bearbeitungsleitung, des Werkzeuges im Einsatz dynamisch.

Beispielsweise ist das Werkzeug ein Tellerschleifwerkzeug mit Lamellen-, Flies- oder Borstenelementen. Diese Schleifwerkzeuge weisen eine mehr oder weniger flexible Bearbeitungsoberfläche auf, welche im Einsatz durch die Bearbeitung einem hohen Verschleiss unterworfen ist und damit die Dicke resp. Tiefe und somit die Leistung des Werkzeuges im Einsatz dynamisch stetig ändert. Daher muss vor jedem Bearbeitungsvorgang die effektive Lage der Bearbeitungsfläche jeweils neu ermittelt werden, um reproduzierbare Bearbeitungen am Werkstück zu erzielen. Durch die Verwendung der erfindungsgemässen Sensoren kann diese Initialisierung jeweils unmittelbar beim Bearbeitungsbeginn durch Eingriff des Werkzeuges auf die Oberfläche des Werkstückes ermittelt werden und damit wird keine Zeit mit einer örtlich getrennten, optischen Erfassung der Ausgangsposition verloren. Durch entsprechende Auswertung der Sensorsignale kann auch eine direkte Leistungssteuerung resp. Tiefensteuerung der Werkzeuge erfolgen.

Weiter wird die Aufgabe erfindungsgemäss durch das Verfahren mit den Merkmalen nach Anspruch 8 gelöst. Weitere erfindungsgemässe Ausführungsformen ergeben sich aus den Merkmalen der Ansprüche 9 bis 11.

Beim Verfahren zur schleifenden Bearbeitung von Werkstücken mit einer erfindungsgemässen Vorrichtung erfolgt die Festlegung der Ausgangsposition des Spindelhalters durch gesteuerte Absenkung des Spindelhalters in Richtung des Werkstückes, bis die Auswertung mindestens eines Sensors das Berühren des Werkzeuges mit der Oberfläche des Werkstückes über akustische Wellen oder mechanische Schwingungen anzeigt. Ausgehend von dieser Position erfolgt eine gesteuerte Bearbeitung des Werkstückes durch das Werkzeug. Vorteilhaft wird damit die Ausgangsposition unmittelbar beim Eingriff des Werkzeuges auf resp. in das Werkstück ermittelt, so dass keine Zeit durch eine Zustellbewegung von der Messposition zur Bearbeitungsposition verloren geht. Weiter kann damit unabhängig von der effektiven Werkzeugbeschaffenheit diese Ausgangsposition jeweils präzise festgestellt werden und eine präzise, gesteuerte Bearbeitung des Werkstückes folgen. Diese führt zu optimalen Bearbeitungszeiten, da kaum Leerzeiten zur Bestimmung der Ausgangsposition anfallen.

Beispielsweise erfolgt die Steuerung der Eintauchtiefe des Werkzeuges resp. der Bewegung des Spindelhalters in Richtung des Werkstückes während der Bearbeitungsphase aufgrund von gespeicherten vorgegebenen Werten ausgehend von der jeweils vorgängig bestimmten Ausgangsposition. Unter Berücksichtigung der absoluten Position des Spindelträgers und der bekannten Position der Oberfläche des zu bearbeitenden Werkstückes kann damit auch der effektive Verschleiss des Werkzeuges ermittelt werden und daraus beispielsweise ein notwendiger Werkzeugwechsel angezeigt werden. Ebenfalls kann aufgrund der verbleibenden Dicke resp. Tiefe des Werkzeuges die Bearbeitungswerte angepasst werden, falls sich diese bei gewissen Werkzeugen in Abhängigkeit ihrer verbleibenden Dicke resp. Tiefe ändern.

Beispielsweise wird die Antriebsleistung des Werkzeuges zumindest während der Zustellphase des Werkzeuges in Abhängigkeit des Signals des Sensors gesteuert. Vorzugsweise erfolgt dies, indem ein vorgegebener Soll-Wert des Signals des Sensors durch entsprechende Änderung der Antriebsleistung eingehalten wird. Es hat sich gezeigt, dass damit unabhängig vom aktuellen Verschleiss des Werkzeuges über die gesamte Einsatzdauer des Werkzeuges konstante Bearbeitungswerte erzielt werden.

Beispielsweise werden die Soll-Werte aufgrund von Messungen bestimmt, welche jeweils einem bestimmten Werkzeugtyp und Werkstücktyp zugeordnet werden. Vor der Bearbeitung einer grossen Anzahl von Werkstücken können die auf derselben Maschine die optimalen Werte ermittelt werden und als Soll-Werte in der Maschinensteuerung resp. der Auswertungseinheit hinterlegt resp. gespeichert werden. Ausführungsbeispiele der vorliegenden Erfindung werden nachstehend anhand von Figuren noch näher erläutert. Es zeigen
Fig. 1 schematisch die Seitenansicht einer erfindungsgemässen Vorrichtung mit dem Spindelträger in der Ruheposition;
Fig. 2 schematisch die Seitenansicht einer erfindungsgemässen Vorrichtung in der Ausgangsposition zur Bearbeitung des Werkstückes, mit zwei unterschiedlichen Werkstückpositionen;
Fig. 3 schematisch die Seitenansicht einer erfindungsgemässen Vorrichtung in einer Bearbeitungsposition mit im Werkstück eingetauchtem Werkzeug, mit zwei unterschiedlichen Werkstückpositionen; und
Fig. 4 die Ansicht auf die Bearbeitungsseite eines Werkzeugkopfes mit vier parallel zueinander angeordneten Werkzeugen.

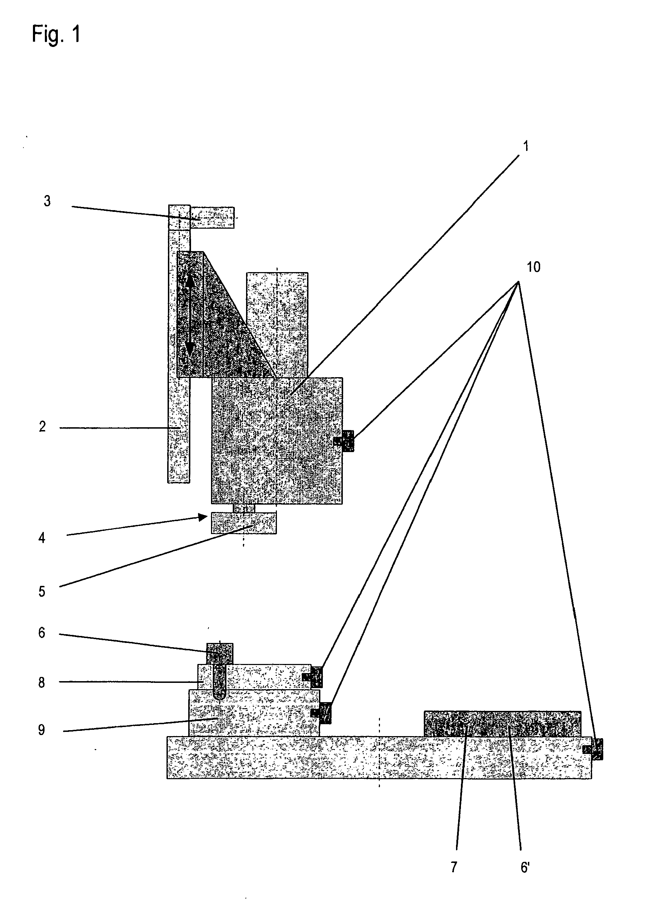

In Figur 1 ist rein schematisch die Seitenansicht einer erfindungsgemässen Vorrichtung dargestellt.

Der Spindelträger 1 der erfindungsgemässen Vorrichtung ist entlang einer vertikalen Verstellachse 2 nach oben und unten verschiebbar angeordnet. Die Verschiebung wird durch einen Servoantrieb 3 bewirkt, welcher an eine herkömmliche Maschinensteuerung (nicht dargestellt) angeschlossen ist. Der Spindelträger 1 weist beispielsweise den Antrieb und das Getriebe für den Schleifkopf 4 auf.

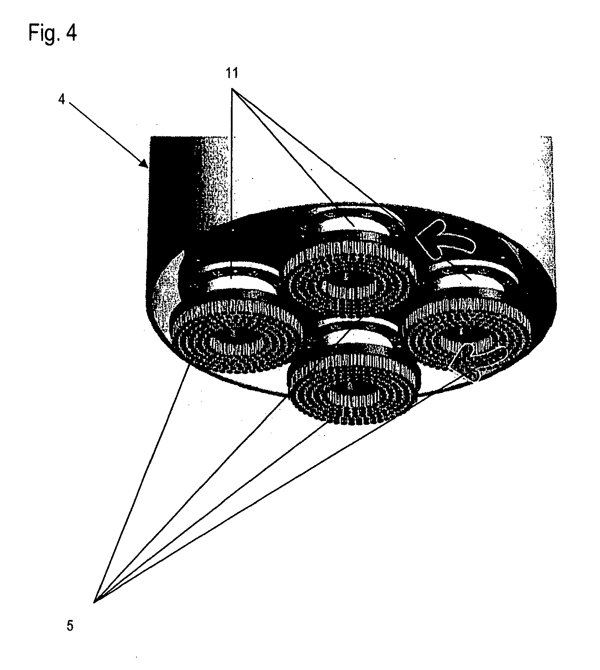

Beim Schleifkopf 4 kann es sich beispielsweise um einen Mehrfach-Werkzeughalter mit mehreren Schleifwerkzeugen 5 handeln, wie er in Figur 4 dargestellt ist. Selbstverständlich kann es sich aber auch um einen herkömmlichen Schleifkopf 4 mit einem einzelnen Schleifwerkzeug 5 handeln.

Unterhalb des Spindelträgers 1 ist das zu bearbeitende Werkstück 6, 6' angeordnet. Dieses Werkstück 6, 6' kann entweder direkt auf einer Transportbahn 7 aufliegen oder in einer Werkstückaufnahme 8 und einem Werkstückträger 9 gehalten sein, welche ihrerseits auf der Transportbahn 7 angeordnet sind. Durch die Transportbahn 7 kann das Werkstück 6, 6' horizontal gegenüber dem Spindelträger 1 bewegt werden. Vorzugsweise erfolgt diese Steuerung ebenfalls mittels der Maschinensteuerung.

Erfindungsgemäss sind nun ein oder mehrere akustische Sensoren 10 angeordnet. Beispielsweise kann der Sensor 10 am Spindelträger 1 angeordnet sein, an der Werkstückaufnahme 8, am Werkstückträger 9 oder an der Transportbahn 7 oder es können mehrere Sensoren 10 an mehreren dieser Elemente zusammen angeordnet sein. Der oder die Sensoren 10 sind über eine Auswertungseinheit (nicht dargestellt) mit der Maschinensteuerung verbunden. Es ist für den Fachmann klar, dass neben der Anordnung eines einzelnen Sensors 10 auch eine Kombination der erwähnten Anordnungen von Sensoren 10 eingesetzt werden kann und deren Signale über die Auswertungseinheit ausgewertet werden und entsprechend die Maschinensteuerung beeinflussen.

Die Sensoren 10 können rein akustische Sensoren sein, welche bereits das erste Touchieren der Werkzeugebene mit der Oberfläche des Werkstückes 6 erfassen können. Ebenfalls können solche akustische Sensoren 10 den Bearbeitungsdruck resp. die Bearbeitungsleistung des Werkzeuges 5 am Werkstück 6 erfassen und damit über die Maschinensteuerung einen entsprechend vorgegebenen Wert für die Bearbeitung durch Steuerung des Servoantriebes 3 einstellen.

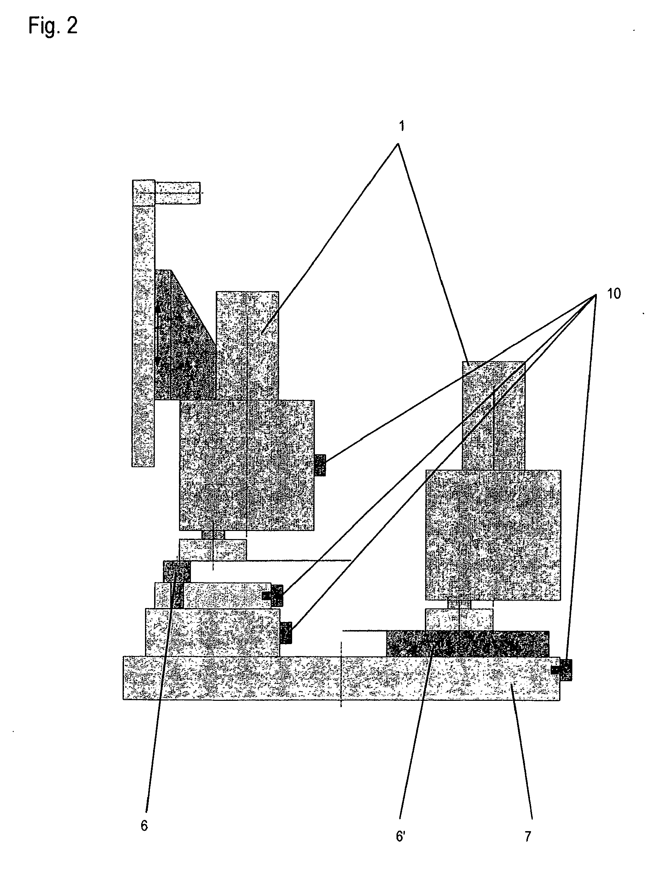

In Figur 2 ist nun der erste Schritt, die Einstellung der Ausgangsposition für die Bearbeitung des Werkstückes 6 resp. 6', das sogenannte Referenzieren, schematisch dargestellt. Dabei wird, wie oben erwähnt, die Position des Werkzeuges gegenüber dem Werkstück 6 resp. 6' kalibriert, d.h. der Beginn des Eingriffes des Werkzeuges 5 auf die Oberfläche des Werkstückes 6 resp. 6' über die Sensoren 10 erfasst und festgestellt. Die zuerst mit dem Werkstück 6 resp. 6' in Kontakt gelangende Ebene des Werkzeuges 5 wird als Werkzeugebene bezeichnet. Dieser Positionswert des Spindelträgers 1 wird jeweils exakt für die aktuelle Werkzeugebene des Werkzeuges 5 festgestellt, unabhängig vom aktuellen Verschleiss des Werkzeuges 5 an sich. Aufgrund dieser ermittelten Position kann nun der Bearbeitungsablauf durch die Maschinensteuerung entsprechend vorgegebenen Werten immer wieder präzise eingestellt und durchgeführt werden. Ein grosser Vorteil ist darin zu sehen, dass die Position unmittelbar beim Eingriff des Werkzeugs 5 am Werkstück 6 ermittelt und festgestellt wird und damit die Bearbeitung des Werkstückes 6 ohne weitere Zustellverzögerung begonnen werden kann. Dies im Gegensatz beispielsweise zur bekannten optischen Kalibrierung, welche immer mit einem gewissen Abstand der Werkzeugebene oberhalb des Werkstückes 6 erfolgen muss und damit anschliessend an die Messung resp. Kalibrierung einen zusätzlichen Zeitbedarf für die Zustellung des Spindelträger 1 resp. des Erkezuges 5 bis zur Oberfläche des Werkstückes 6 bedingt.

Auf der linken Seite von Figur 2 ist der Einsatz der Vorrichtung an einem Werkstück 6 dargestellt, welches in einer Werkstückaufnahme 8 angeordnet ist, welche ihrerseits auf einem Werkstückträger 9 angeordnet ist.

Der Schall resp. die Schwingungen, welche beim Eingreifen des Werkzeuges 5 auf die Oberfläche des Werkstückes 6 resp. 6' erzeugt werden, werden durch die Sensoren 10 erfasst und können in einer Auswertungseinheit ausgewertet und als Signal der Maschinensteuerung zugeführt werden. Die Sensoren 10 können dabei vorteilhaft am Spindelträger 1 resp. an der Transportbahn 7, an der Werkstückaufnahme 8 oder am Werkstückträger 9 angeordnet sein und nicht etwas am Werkstück 6 resp. 6' selbst. Somit kann eine vollständige Bearbeitung des Werkstückes 6 resp. 6' gewährleistet werden, ohne dass störende Befestigungsmöglichkeiten am Werkstück 6 resp. 6' selbst vorgesehen sein müssen.

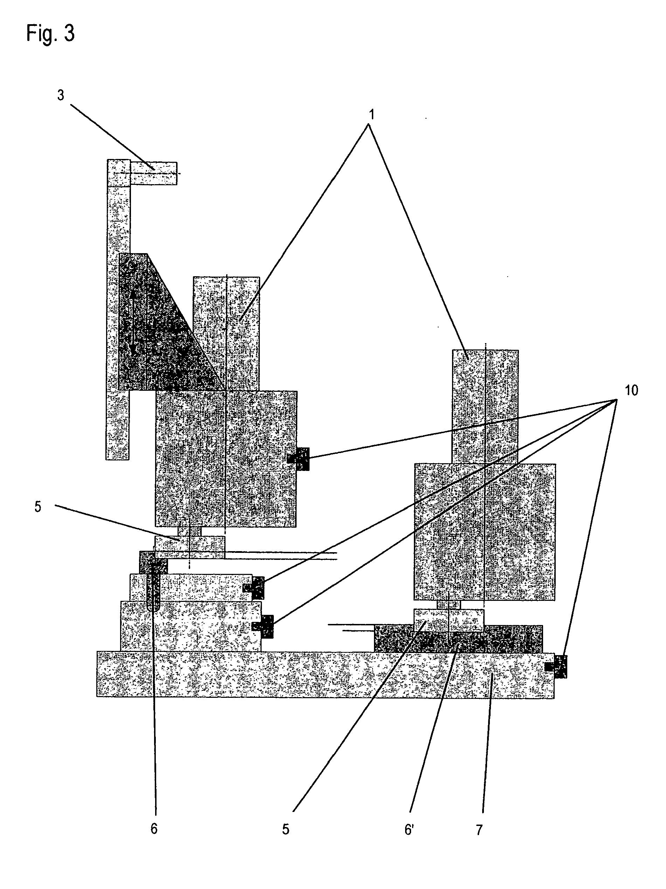

In Figur 3 ist als weiterer Schritt die eigentliche Bearbeitung des Werkstückes 6 resp. 6', das sogenannte Kompensieren, schematisch dargestellt. Dabei ist das Werkzeug 5 im Werkstück 6 resp. 6' eingetaucht und führt die Bearbeitung mit einer gewissen, vorgegebenen Leistung aus. Das Eintauchen wird durch eine entsprechende Bewegung des Spindelhalters 1 nach unten, gesteuert über die Maschinensteuerung und dem Servoantrieb 3, bewirkt.

Die Steuerung dieser Leistung erfolgt nun ebenfalls über die Sensoren 10, welche beispielsweise das leistungsabhängige Geräusch resp. Schwingungen des Werkzeuges 5 im Werkstück 6 erfassen und über die Auswertungseinheit und Maschinensteuerung entsprechend die vorgegebene Leistung konstant einhalten resp. regeln können. Auch hier kann wiederum praktisch unabhängig vom aktuellen Verschleisszustand des Werkzeuges 5 eine unterbruchsfreie Bearbeitung der Werkstücke 6 resp. 6' erfolgen.

Durch die Kombination der beiden genannten Schritte können vorteilhaft reproduzierbare, exakte Bearbeitungsresultate ohne Bearbeitungsunterbrüche zur Kalibrierung der Werkzeuge erzielt werden und damit gegenüber der optischen Kalibriermethode kürzere totale Bearbeitungszeiten realisiert werden.

In Figur 4 ist noch die Ansicht auf einen Werkzeugkopf 4 mit vier Spindeln dargestellt, wobei jede Spindel einzeln vertikal verschiebbar angeordnet ist. Jeder der Spindeln ist dabei mit einem Tellerschleifmittel in Form von Bürstentellern 11 ausgerüstet. Es können nun jeweils unterschiedliche Tellerschleifmittel 11 an jeder oder an ausgewählten Spindeln angeordnet werden, da jede Spindel und damit jedes Tellerschleifmittel 11 individuell in die Arbeitsposition abgesenkt werden kann. Damit ist es möglich, ohne Auswechseln von Tellerschleifmitteln 11 mit einem einzigen Werkzeugkopf 4 unterschiedliche Bearbeitungsprozesse an denselben Werkstücken vorzunehmen. Bei einem mit vier Spindeln ausgerüstetem Werkzeughalter 4 sind beispielsweise unterschiedliche Bearbeitungsprozesse mit maximal vier verschiedenen Bearbeitungsmitteln ausführbar. Gerade bei einem derartigen Werkzeugkopf 4 bringt die Kalibrierung mit den vorgängig genannten Sensoren 10 grosse Vorteile, da die Werkzeugebenen der unterschiedlichen Tellerschleifmittel 11 in Bezug auf den Werkzeugkopf 4 unterschiedlich ausfallen werden und eine zuverlässige optische Messung im Betrieb verhältnismässig grosse Zustellwege und freien Raum zum Werkstück bedingen, was die gesamte Bearbeitungszeit wesentlich erhöht. Beim Einsatz der erfindungsgemäss vorgesehenen Sensoren 10 können diese Wege bei einem Werkzeugwechsel wesentlich kürzer ausfallen und es benötigt keine zusätzlichen und zeitraubenden Kalibrierbewegungen mehr.

## Patentansprüche

1. Vorrichtung zur gesteuerten Bearbeitung von Werkstückoberflächen mit tellerförmigen Schleifwerkzeugen (5) mit einer Werkzeugsteuerung, wobei die Schleifwerkzeuge (5) eine flexible Bearbeitungsoberfläche aufweisen, in einem Spindelhalter (1) rotierend angetrieben angeordnet sind und der Spindelhalter (1) mindestens vertikal gegenüber einer Transportbahn (7) zur Aufnahme der zu bearbeitenden Werkstücke (6,6') bewegbar angeordnet und mit einem gesteuerten Antrieb (3) für die vertikale Bewegung verbunden ist, wobei mindestens ein Sensor (10) zur Erfassung von Schwingungen oder Geräuschen durch die Schleifwerkzeuge (5) am Werkstück (6,6') an der Vorrichtung angeordnet und mit der Werkzeugsteuerung wirkverbunden ist, **dadurch gekennzeichnet, dass** der mindestens eine Sensor (10) ausgebildet ist, die Schwingungen oder Geräusche durch die Schleifwerkzeuge (5) am Werkstück (6,6') leistungsabhängig zu erfassen und anhand der Erfassung den Bearbeitungsdruck und/oder die Bearbeitungsleistung der Schleifwerkzeuge (5) am Werkstück (6,6') zu bestimmen und hierdurch einen entsprechend vorgegebenen Wert für die gesteuerte Bearbeitung durch Steuerung des gesteuerten Antriebs (3) einzustellen.

2. Vorrichtung nach Anspruch 1, **dadurch gekennzeichnet,**
**dass** das Werkstück (6,6') auf der Transportbahn (7) direkt oder über eine Werkstückaufnahme (8) und/oder Werkstückträger (9) angeordnet ist.

3. Vorrichtung nach Anspruch 2, **dadurch gekennzeichnet, dass** der Sensor (10) am Spindelhalter (1) und/oder der Transportbahn (7) und/oder der Werkstückaufnahme (8) und/oder dem Werkstückträger (9) angeordnet ist.

4. Vorrichtung nach einem der Ansprüche 1 bis 3, **dadurch gekennzeichnet, dass** der Sensor (10) ein Akustiksensor oder ein Schwingungssensor ist.

5. Vorrichtung nach einem der Ansprüche 1 bis 4, **dadurch gekennzeichnet, dass** mindestens ein Sensor (10) über eine Auswertungseinheit mit der Maschinensteuerung verbunden ist.

6. Vorrichtung nach einem der Ansprüche 1 bis 5, **dadurch gekennzeichnet, dass** im Spindelhalter (1) eine oder mehrere Spindeln zur Aufnahme jeweils eines Werkzeuges (5) angeordnet sind, wobei vorzugsweise jede Spindel einzeln gesteuert vertikal bewegbar ist.

7. Vorrichtung nach einem der Ansprüche 1 bis 8, **dadurch gekennzeichnet, dass** das Werkzeug (5) ein Tellerschleifwerkzeug mit Lamellen-, Flies- oder Borstenelementen ist.

8. Verfahren zur schleifenden Bearbeitung von Werkstücken (6,6') mit einer Vorrichtung nach einem der Ansprüche 1 bis 7, **dadurch gekennzeichnet, dass** die Festlegung der Ausgangsposition des Spindelhalters (1) durch gesteuerte Absenkung des Spindelhalters (1) in Richtung des Werkstückes (6,6') erfolgt, bis die Auswertung mindestens eines Sensors (10) das Berühren des Werkzeuges (5) mit der Oberfläche des Werkstückes (6) über akustische Wellen oder mechanische Schwingungen anzeigt, und von dieser Position ausgehend eine gesteuerte Bearbeitung des Werkstückes (6,6') durch das Werkzeug (5) erfolgt.

9. Verfahren nach Anspruch 8, **dadurch gekennzeichnet, dass** die Steuerung der Eintauchtiefe des Werkzeuges (5) resp. der Bewegung des Spindelhalters (1) in Richtung des Werkstückes (6,6') während der Bearbeitungsphase aufgrund von gespeicherten vorgegebenen Werten ausgehend von der jeweils vorgängig bestimmten Ausgangsposition erfolgt.

10. Verfahren nach Anspruch 8 oder 9, **dadurch gekennzeichnet, dass** die Antriebsleistung des Werkzeuges (5) zumindest während der Zustellphase des Werkzeuges (5) in Abhängigkeit des Signals des Sensors (10) gesteuert wird, vorzugsweise indem ein vorgegebener Soll-Wert des Signals des Sensors (10) durch entsprechende Änderung der Antriebsleistung eingehalten wird.

11. Verfahren nach Anspruch 10, **dadurch gekennzeichnet, dass** die Soll-Werte aufgrund von Messungen bestimmt werden, welche jeweils einem bestimmten Werkzeugtyp und Werkstücktyp zugeordnet werden.

## Claims

1. An apparatus for the controlled machining of workpiece surfaces with saucer-shaped grinding tools (5) with a tool controller, wherein the grinding tools (5) have a flexible machining surface, in which a spindle holder (1) is arranged in a rotatably driven manner, and the spindle holder (1) is at least vertically movably arranged in relation to a transport track (7) for accommodating the workpieces (6, 6') to be machined and is connected to a controlled drive (3) for the vertical movement, wherein at least one sensor (10) for detecting oscillations or noises by the grinding tools (5) on the workpiece (6, 6') are arranged on the apparatus and are operatively connected to the tool controller, **characterized in that** the at least one sensor (10) is formed to detect the oscillations or noises by the grinding tools (5) on the workpiece (6, 6') in a power-dependent manner, and to determine the machining pressure and/or the machining power of the grinding tools (5) on the workpiece (6, 6') on the basis of the detection, and to thus set a respectively predetermined value for the controlled machining by controlling the controlled drive (3).

2. An apparatus according to claim 1, **characterized in that** the workpiece (6, 6') is arranged on the transport track (7) directly or via a workpiece mount (8) and/or workpiece support (9).

3. An apparatus according to claim 2, **characterized in that** the sensor (10) is arranged on the spindle holder (1) and/or the transport track (7) and/or the workpiece mount (8) and/or the workpiece support (9).

4. An apparatus according to one of the claims 1 to 3, **characterized in that** the sensor (10) is an acoustic sensor or an oscillation sensor.

5. An apparatus according to one of the claims 1 to 4, **characterized in that** the at least one sensor (10) is connected via an evaluation unit to the machine controller.

6. An apparatus according to one of the claims 1 to 5, **characterized in that** one or several spindles for respectively accommodating a tool (5) are arranged in the spindle holder (1), wherein preferably each spindle is individually vertically movable in a controlled manner.

7. An apparatus according to one of the claims 1 to 6, **characterized in that** the tool (5) is a plate grinding tool with slat elements, nonwoven elements or brush elements.

8. A method for the grinding machining of workpieces (6, 6') having an apparatus according to one of the claims 1 to 7, **characterized in that** the determination of the starting position of the spindle holder (1) occurs by controlled lowering of the spindle holder (1) in the direction of the workpiece (6, 6') until the evaluation of at least one sensor (10) indicates contact of the tool (5) with the surface of the workpiece (6) via acoustic waves or mechanical oscillations, and commencing from this position a controlled machining of the workpiece (6, 6') occurs by the tool (5).

9. A method according to claim 8, **characterized in that** the control of the insertion depth of the tool (5) or the movement of the spindle holder (1) in the direction of the workpiece (6, 6') during the machining phase occurs through stored predetermined values on the basis of the starting position that was respectively previously determined.

10. A method according to claim 8 or 9, **characterized in that** the drive power of the tool (5), at least during the advancing phase of the tool (5), is controlled depending on the signal of the sensor (10), preferably **in that** a predetermined target value of the signal of the sensor (10) is maintained by a respective change in the drive power.

11. A method according to claim 10, **characterized in that** the target values are
determined on the basis of measurements which are respectively associated with a specific type of tool and type of workpiece.

## Revendications

1. Dispositif d'usinage commandé de surfaces de pièces à usiner comprenant des outils de meulage en forme de disque (5) avec une commande d'outil, dans lequel les outils de meulage (5) présentent une surface d'usinage flexible, sont agencés entraînés en rotation dans un porte-broche (1) et dans lequel le porte-broche (1) est agencé mobile au moins verticalement par rapport à une voie de transport (7) pour recevoir la pièce à usiner (6, 6') et est raccordé à un entraînement commandé (3) pour le mouvement vertical, dans lequel il est agencé au niveau du dispositif au moins un capteur (10) pour détecter des vibrations ou des bruits à travers les outils de meulage (5) sur la pièce à usiner (6, 6'), ce capteur étant en liaison active avec la commande d'outil, **caractérisé en ce que** le au moins un capteur (10) est conçu pour détecter les vibrations ou les bruits à travers les outils de meulage (5) au niveau de la pièce à usiner (6, 6') en fonction de la puissance et, à l'aide de cette détection, pour déterminer la pression d'usinage et/ou la puissance d'usinage des outils de meulage (5) sur la pièce à usiner (6, 6') et ainsi régler une valeur prédéfinie correspondante pour l'usinage commandé en contrôlant l'entraînement commandé (3).

2. Dispositif selon la revendication 1, **caractérisé en ce que** la pièce à usiner (6, 6') est agencée directement sur la voie de transport (7) ou au-dessus d'un logement de pièce (8) et/ou d'un support de pièce (9).

3. Dispositif selon la revendication 2, **caractérisé en ce que** le capteur (10) est agencé sur le porte-broche (1) et/ou sur la voie de transport (7) et/ou sur le logement de pièce (8) et/ou sur le support de pièce (9).

4. Dispositif selon l'une des revendications 1 à 3, **caractérisé en ce que** le capteur (10) est un capteur sonore ou un capteur d'oscillations.

5. Dispositif selon l'une des revendications 1 à 4, **caractérisé en ce qu'**au moins un capteur (10) est relié à la commande de machine par le biais d'une unité d'analyse.

6. Dispositif selon l'une des revendications 1 à 5, **caractérisé en ce qu'**il est agencé dans le porte-broche (1) une ou plusieurs broches destinées à recevoir chacune un outil (5), chaque broche étant de préférence mobile verticalement et commandée séparément.

7. Dispositif selon l'une des revendications 1 à 6, **caractérisé en ce que** l'outil (5) est une ponceuse avec des éléments à lamelles, en non-tissé ou des éléments de brosses.

8. Procédé pour usiner par polissage des pièces à usiner (6, 6') avec un dispositif selon l'une des revendications 1 à 7, **caractérisé en ce que** la détermination de la position de départ du porte-broche (1) se fait en abaissant de façon commandée le porte-broche (1) en direction de la pièce à usiner (6, 6') jusqu'à ce que l'analyse d'au moins un capteur (10) indique un contact de l'outil (5) avec la surface de la pièce à usiner (6) par le biais d'ondes acoustiques ou d'oscillations mécaniques, un usinage commandé de la pièce à usiner (6, 6') par l'outil (5) étant ensuite effectué à partir de cette position.

9. Procédé selon la revendication 8, **caractérisé en ce que** la commande de la profondeur d'immersion de l'outil (5) respectivement du mouvement du porte-broche (1) en direction de la pièce à usiner (6, 6') pendant la phase d'usinage se fait sur la base de valeurs prédéfinies et mémorisées à partir de la position de départ définie au préalable.

10. Procédé selon la revendication 8 ou 9, **caractérisé en ce que** la puissance d'entraînement de l'outil (5), au moins pendant la phase d'avance de l'outil (5), est commandée en fonction du signal du capteur (10), une valeur de consigne prédéfinie du signal du capteur (10) étant de préférence respectée en modifiant en conséquence la puissance d'entraînement.

11. Procédé selon la revendication 10, **caractérisé en ce que** les valeurs de consigne sont déterminées sur la base de mesures qui sont toutes associées à un type d'outil et à un type de pièce particuliers.
